# EUROPEAN PATENT APPLICATION

(11) **EP 4 790 518 A1**
(43) Date of publication of application: **12.08.2026**
(21) Application number: 23954729.2
(22) Date of filing: 03.10.2023
(51) Int. Cl.: G06F 1/20, G06F 1/16

(54) **CRADLE AND ELECTRONIC DEVICE SUPPORT SYSTEM**

(71) Applicant: Nintendo Co., Ltd., Kyoto-shi, Kyoto 601-8501 (JP)
(72) Inventor: NISHIDA, Takafumi, Kyoto-shi, Kyoto 601-8501 (JP); MORITA, Kensuke, Kyoto-shi, Kyoto 601-8501 (JP); FURUIKE, Hironori, Kyoto-shi, Kyoto 601-8501 (JP)
(74) Representative: Bardehle Pagenberg Partnerschaft mbB Patentanwälte Rechtsanwälte
(86) International application number: PCT/JP2023/036118
(87) International publication number: WO 2025/074517

(57) **Abstract**

Cradle facilitates cooling of inside of each of cradle and electronic device. Cradle includes housing, board, and fan. Housing supports electronic device having device inlet. Housing has first internal space, second internal space separate from first internal space, facing wall facing first internal space and device inlet of electronic device supported by housing, and bottom wall facing first and second internal spaces. Board is in second internal space. Bottom wall has first inlet in part facing first internal space and second inlet in part facing second internal space. Facing wall has first outlet. Housing has second outlet in part facing second internal space. Fan causes air to flow from second inlet to second outlet through second internal space.

## Description

### TECHNICAL FIELD

The present disclosure relates to a cradle that can support an electronic device and an electronic device support system including the cradle and the electronic device.

### BACKGROUND ART

A device holder that can hold an electronic device is described in Patent Document 1 as an example of the cradle.

### PRIOR ART DOCUMENTS

### PATENT LITERATURE

Patent Literature 1: JP-A-2022-182852

### SUMMARY OF THE INVENTION

### PROBLEMS TO BE SOLVED BY THE INVENTION

Cradles are to be improved to increase the cooling effect inside a cradle and inside an electronic device supported by the cradle.

In response to the above issue, one or more aspects of the present disclosure are directed to a cradle and an electronic device support system that facilitate cooling of the inside of the cradle and the inside of the electronic device supported by the cradle.

### SOLUTIONS TO THE PROBLEMS

In response to the above, a cradle according to an aspect of the present disclosure includes a housing, a board, and a fan. The housing supports an electronic device having at least one device inlet. The housing has a first internal space, a second internal space separate from the first internal space, a facing wall facing the first internal space and having a first outlet to face the at least one device inlet of the electronic device being supported by the housing, and a bottom wall facing the first internal space and the second internal space. The board is located in the second internal space and has at least one heat-generating component mounted thereon. The bottom wall has a first inlet in a part facing the first internal space. The bottom wall has a second inlet in a part facing the second internal space. The housing has a second outlet in a part facing the second internal space. The fan causes air to flow from the second inlet to the second outlet through the second internal space.

An electronic device support system according to an aspect of the present disclosure includes the cradle and the electronic device.

### EFFECTS OF THE INVENTION

The cradle and the electronic device support system according to the above aspects of the present disclosure can facilitate cooling of the inside of the cradle and the inside of the electronic device supported by the cradle.

### BRIEF DESCRIPTION OF THE DRAWINGS

Fig. 1 is a schematic rear view of an electronic device support system according to an embodiment of the present disclosure.
Fig. 2 is a schematic plan view of the electronic device support system according to the embodiment of the present disclosure.
Fig. 3 is a schematic perspective view of a cradle according to the embodiment of the present disclosure.
Fig. 4 is a perspective view of the cradle in Fig. 3 with a cover being detached.
Fig. 5 is a sectional view taken along line V-V in Fig. 2.
Fig. 6 is a sectional view taken along line VI-VI in Fig. 2 with an electronic device separated from the cradle.
Fig. 7 is a schematic bottom view of the cradle according to the embodiment of the present disclosure.
Fig. 8 is a schematic perspective view of the cradle according to the embodiment of the present disclosure.
Fig. 9 is a schematic plan view of the cradle according to the embodiment of the present disclosure.
Fig. 10 is a schematic side view of the cradle according to the embodiment of the present disclosure.

### DETAILED DESCRIPTION

A cradle according to a first aspect of the present disclosure includes a housing, a board, and a fan. The housing supports an electronic device having at least one device inlet. The housing has a first internal space, a second internal space separate from the first internal space, a facing wall facing the first internal space and having a first outlet to face the at least one device inlet of the electronic device being supported by the housing, and a bottom wall facing the first internal space and the second internal space. The board is located in the second internal space and has at least one heat-generating component mounted thereon. The bottom wall has a first inlet in a part facing the first internal space. The bottom wall has a second inlet in a part facing the second internal space. The housing has a second outlet in a part facing the second internal space. The fan causes air to flow from the second inlet to the second outlet through the second internal space.

A cradle according to a second aspect of the present disclosure is the cradle according to the first aspect in which the facing wall and the bottom wall face each other.

A cradle according to a third aspect of the present disclosure is the cradle according to the first aspect or the second aspect in which the housing has a side wall extending, from the bottom wall, in a direction intersecting with the bottom wall and facing the first internal space and the second internal space. The side wall has a third inlet at least in a part facing the first internal space.

A cradle according to a fourth aspect of the present disclosure is the cradle according to the third aspect in which the first inlet has a larger area than the third inlet.

A cradle according to a fifth aspect of the present disclosure is the cradle according to the third aspect or the fourth aspect further including a cover covering the side wall. The cover is detachable from the housing. The cover has a first side surface, a second side surface, and a curved surface connecting the first side surface and the second side surface. The cover covering the side wall has an opening connecting a space between the side wall and the cover with an outside of the cradle. The opening extends from the first side surface to the second side surface through the curved surface.

A cradle according to a sixth aspect of the present disclosure is the cradle according to any one of the third to fifth aspects in which the side wall has a fourth inlet only in a part facing the second internal space. The side wall has the third inlet only in a part facing the first internal space.

A cradle according to a seventh aspect of the present disclosure is the cradle according to the sixth aspect in which the second inlet has a larger area than the fourth inlet.

A cradle according to an eighth aspect of the present disclosure is the cradle according to any one of the third to seventh aspects in which the electronic device includes two device inlets and one or more heat-generating components inside the electronic device. A heat-generating component with highest heat generation of the one or more heat-generating components inside the electronic device is located closer to a first device inlet of the two device inlets than to a second device inlet of the two device inlets. The first outlet faces the two device inlets. The third inlet is located closer to the first device inlet of the two device inlets than to the second device inlet of the two device inlets when the electronic device is supported by the housing.

A cradle according to a ninth aspect of the present disclosure is the cradle according to any one of the first to eighth aspects further including a mesh member covering the first inlet and the second inlet.

A cradle according to a tenth aspect of the present disclosure is the cradle according to any one of the first to ninth aspects in which the fan is between the bottom wall and the second outlet in a vertical direction perpendicular to the bottom wall in the second internal space. The fan has a discharge opening facing the second outlet in the vertical direction. The second internal space has an inner wall between the discharge opening of the fan and the second outlet. The inner wall has a slope facing the second outlet and inclined with respect to the vertical direction.

A cradle according to an eleventh aspect of the present disclosure is the cradle according to the tenth aspect in which the second internal space has a recess recessed in the vertical direction toward the bottom wall. The recess is located on an imaginary extension plane extending from and along the slope toward the bottom wall.

A cradle according to a twelfth aspect of the present disclosure is the cradle according to any one of the first to eleventh aspects further including one or more first-side feet, one or more second-side feet, and a connection port to which an external cable is connectable. The one or more first-side feet protrude from a bottom surface of the bottom wall opposite to a surface of the bottom wall facing the first internal space and the second internal space. The one or more first-side feet are at first-side positions in a longitudinal direction of the bottom wall when the bottom wall is viewed in a vertical direction perpendicular to the bottom wall. The one or more second-side feet protrude from the bottom surface and are at second-side positions in the longitudinal direction of the bottom wall. The connection port is located on an outer surface of the housing at a first-side position in the longitudinal direction. Each of the one or more first-side feet and the one or more second-side feet includes a contact portion to be in contact with a placement surface when the cradle is placed on the placement surface. The contact portion of at least one of the one or more first-side feet has a lower coefficient of friction than the contact portion of each of the one or more second-side feet.

A cradle according to a thirteenth aspect of the present disclosure is the cradle according to the twelfth aspect in which the one or more first-side feet include a first foot protruding from the bottom surface at a first-side position in a lateral direction of the bottom wall when the bottom wall is viewed in the vertical direction and a second foot protruding from the bottom surface at a second-side position in the lateral direction of the bottom wall. The housing is to support the electronic device with a display of the electronic device facing a first-side position in the lateral direction. The contact portion of the first foot has a lower coefficient of friction than the contact portion of the second foot.

A cradle according to a fourteenth aspect of the present disclosure is the cradle according to any one of the first to thirteenth aspects in which the electronic device includes a microphone inside the electronic device, a lower surface having the at least one device inlet, an upper surface spaced from the lower surface and facing away from the lower surface, and a microphone opening in the upper surface to expose the microphone to an outside of the electronic device. When the electronic device is supported by the housing, the second outlet is located closer to the upper surface than to the lower surface in a vertical direction perpendicular to the bottom wall. The second outlet is offset from the microphone opening in a first direction perpendicular to the vertical direction. The second outlet is offset from the microphone opening in a second direction perpendicular to the vertical direction and the first direction.

A cradle according to a fifteenth aspect of the present disclosure is the cradle according to any one of the first to fourteenth aspects in which the electronic device includes a body having the at least one device inlet and a controller attachable to and detachable from the body. The controller includes an operable portion operable to detach the controller from the body. When the electronic device with the controller attached to the body is supported by the housing, the operable portion faces a corner of a plurality of corners of the housing with a spacing between the operable portion and the corner. The corner of the plurality of corners of the housing facing the operable portion with a spacing between the operable portion and the corner is rounded.

A cradle according to a sixteenth aspect of the present disclosure is the cradle according to any one of the first to fifteenth aspects further including a connection terminal and a conical spring. The connection terminal is located in the first internal space and partially protrudes from the facing wall. The connection terminal is connectable to the electronic device. The conical spring is located in the first internal space between the connection terminal and the bottom wall. The conical spring supports the connection terminal in a manner movable in a vertical direction perpendicular to the bottom wall.

An electronic device support system according to a seventeenth aspect of the present disclosure includes the cradle according to any one of the first to sixteenth aspects and the electronic device.

Embodiments of the present invention will now be described with reference to the drawings. The present invention is not limited to the embodiments. In the drawings, like reference numerals denote substantially the same components.

For ease of explanation, directional terms such as up, down, lateral, vertical, and height are used herein to describe the components in typical use. These terms are not intended to limit the use or other situations of a cradle and an electronic device support system according to one or more embodiments of the present invention.

### (Embodiments)

The structures of a cradle and an electronic device support system according to an embodiment of the present disclosure will now be described.

The cradle according to the embodiment of the present disclosure supports an electronic device and is electrically connected to the electronic device on the cradle. The cradle according to the embodiment of the present disclosure can function as a charger that charges the electronic device on the cradle. The cradle according to the embodiment of the present disclosure can extend the capabilities of the electronic device on the cradle. For example, the extended capabilities of the electronic device include connection of the electronic device to a wired local area network (LAN) with the cradle. The extended capabilities of the electronic device also include, for example, allowing images on a display of the electronic device to be displayed on an external display connected to the cradle.

The electronic device according to the embodiment of the present disclosure is, for example, a game device, a smartphone, or a personal computer. The electronic device support system according to the embodiment of the present disclosure includes the cradle and the electronic device described above. For example, the electronic device support system includes a game device as the electronic device and the cradle that can support the game device.

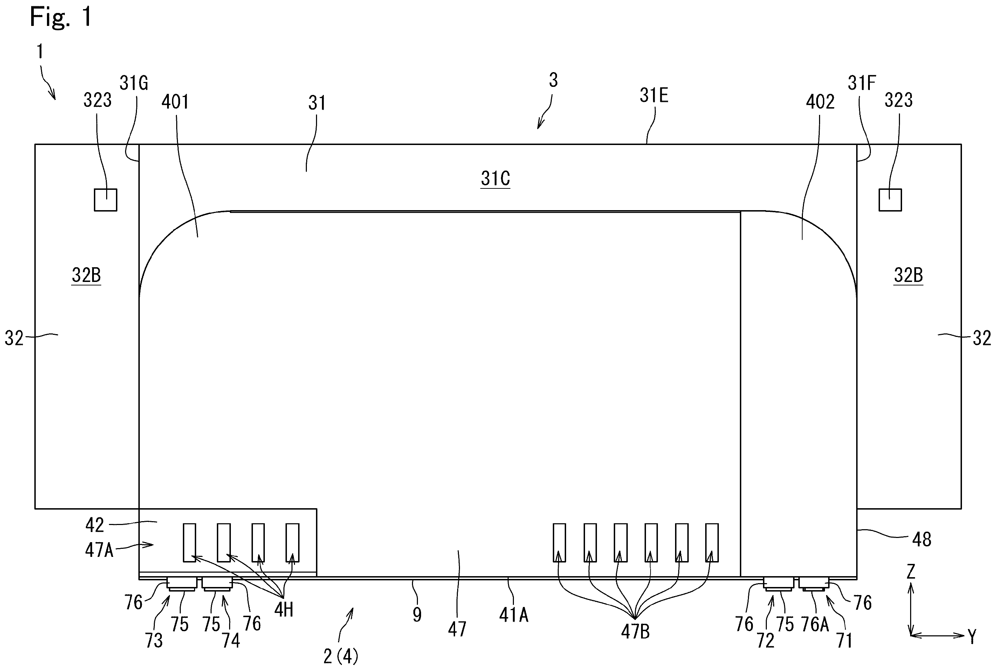

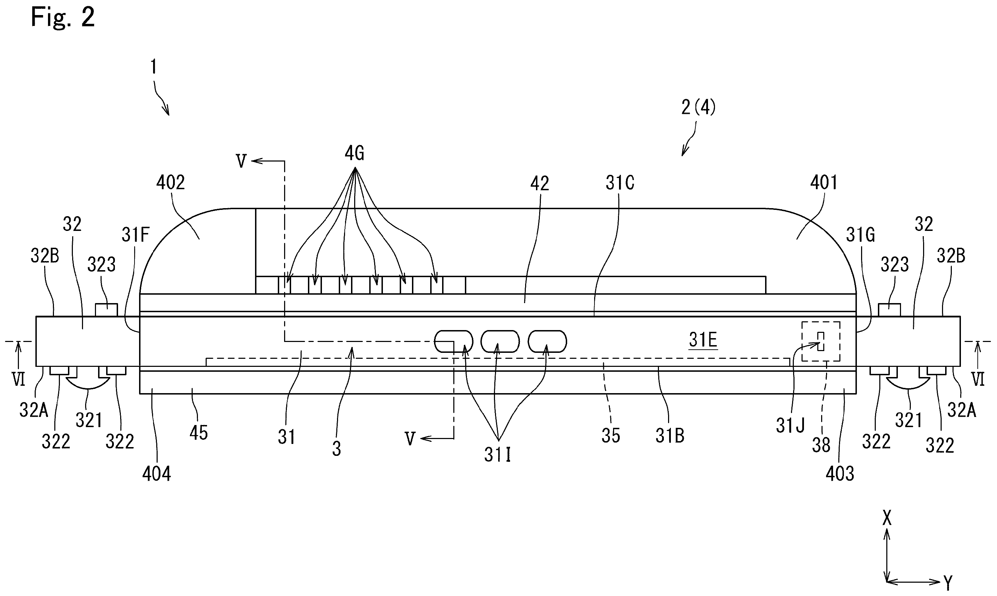

Fig. 1 is a schematic rear view of the electronic device support system according to the embodiment of the present disclosure. Fig. 2 is a schematic plan view of the electronic device support system according to the embodiment of the present disclosure.

As shown in Figs. 1 and 2, an electronic device support system 1 includes a cradle 2 and an electronic device 3. The cradle 2 can support the electronic device 3. In Figs. 1 and 2, the cradle 2 supports the electronic device 3.

For ease of explanation, the electronic device support system 1 has a depth direction referred to as the X-direction, a width direction as the Y-direction, and a height direction as the Z-direction herein and in the drawings. The X-direction, the Y-direction, and the Z-direction are perpendicular to one another. The Z-direction is an example of a vertical direction. In the Z-direction, a portion adjacent to first-side feet 71 and 72 and second-side feet 73 and 74 of the cradle 2 is a lower portion, and a portion opposite to the first-side feet 71 and 72 and the second-side feet 73 and 74 of the cradle 2 (a portion adjacent to device outlets 31I of the electronic device 3) is an upper portion.

As shown in Fig. 2, the electronic device support system 1 is longer in the Y-direction than in the X-direction. The Y-direction is an example of a longitudinal direction and a first direction. The X-direction is an example of a lateral direction and a second direction.

The structure of the cradle 2 will now be described.

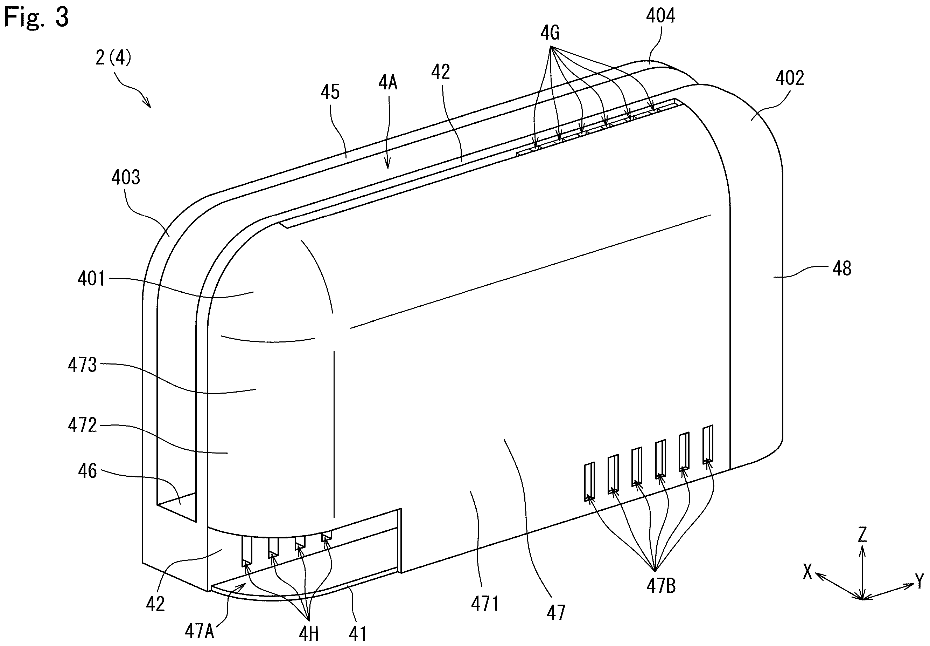

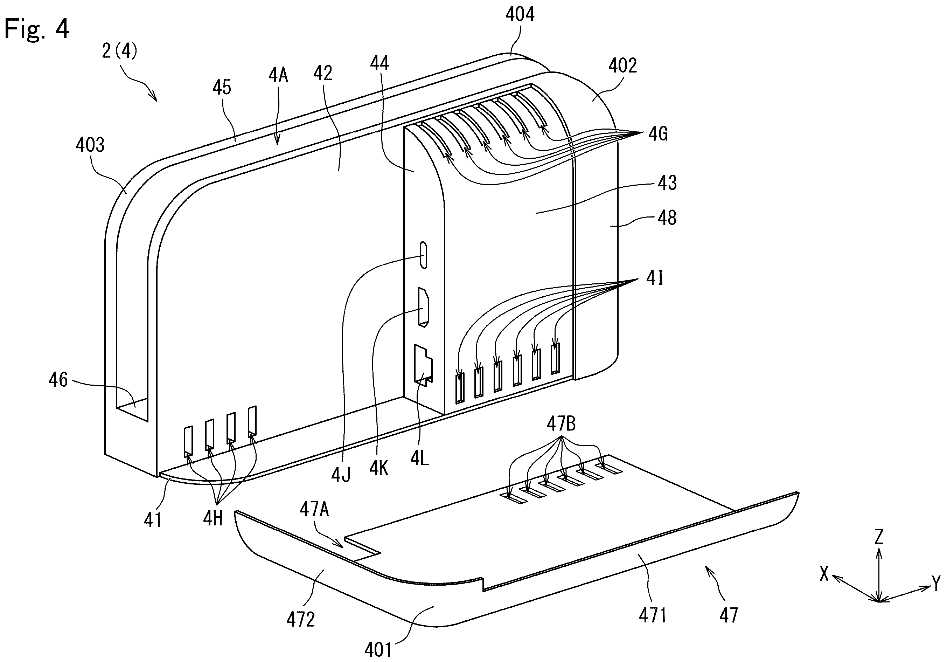

Fig. 3 is a schematic perspective view of the cradle according to the embodiment of the present disclosure. Fig. 4 is a perspective view of the cradle in Fig. 3 with a cover being detached.

As shown in Figs. 3 and 4, the cradle 2 includes a housing 4. The housing 4 includes a bottom wall 41, first side walls 42, 43, and 44, a second side wall 45, and a facing wall 46. The cradle 2 also includes a cover 47 that is detachable from the housing 4. Each of the first side walls 42, 43, and 44 is an example of a side wall.

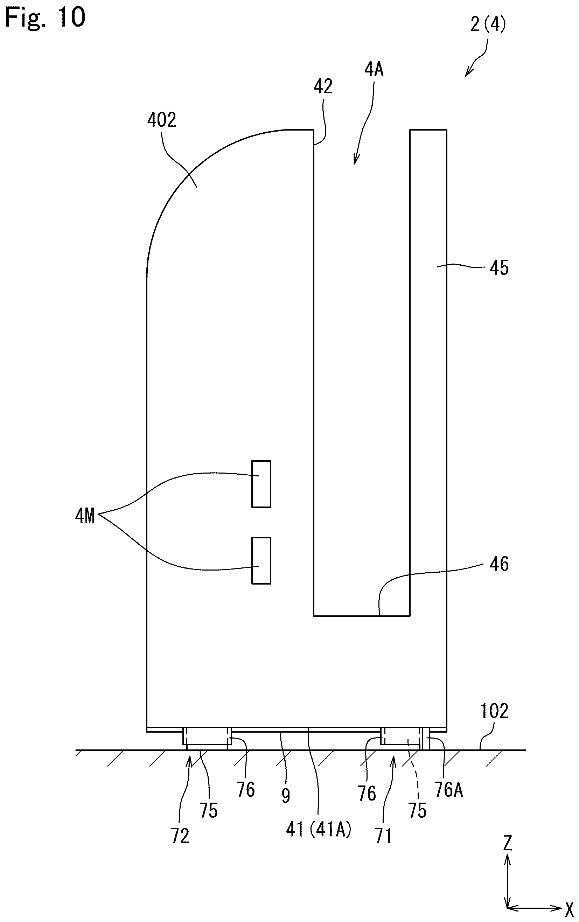

The bottom wall 41 faces a placement surface 102 (refer to Fig. 10) when the housing 4 is placed on, for example, a desk. The first side walls 42, 43, and 44 and the second side wall 45 extend from the bottom wall 41 in a direction intersecting with the bottom wall 41. In the present embodiment, the direction intersecting with the bottom wall 41 is the Z-direction that is perpendicular to the bottom wall 41. More specifically, the first side walls 42, 43, and 44 and the second side wall 45 extend upward from the bottom wall 41. The first side wall 42 and the second side wall 45 face each other in the X-direction.

The facing wall 46 connects the lower end of the first side wall 42 and the lower end of the second side wall 45. The facing wall 46 is located above the bottom wall 41. In the present embodiment, the facing wall 46 faces the bottom wall 41 in the Z-direction. However, the facing wall 46 may not face the bottom wall 41.

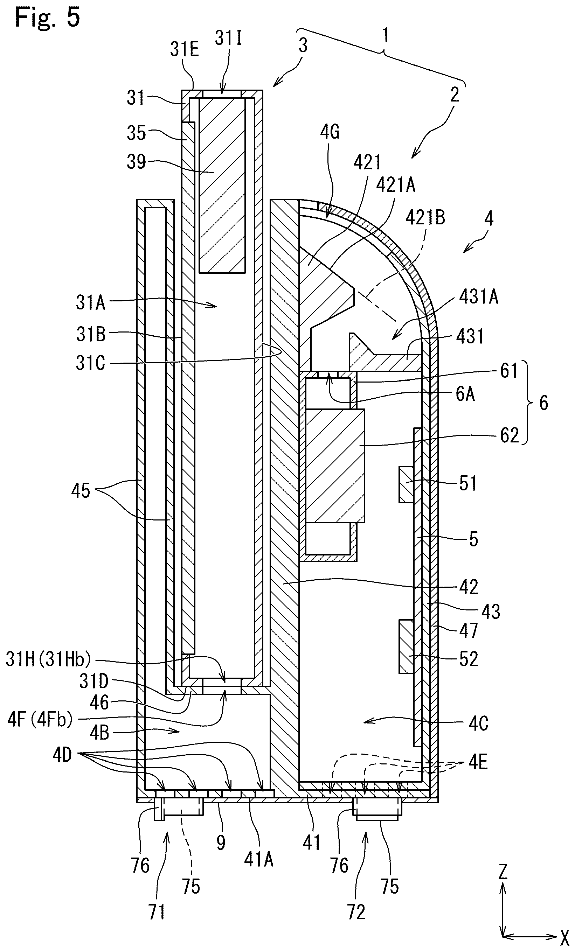

The first side wall 42, the second side wall 45, and the facing wall 46 define a groove 4A recessed downward. When the groove 4A receives the electronic device 3, the cradle 2 supports the electronic device 3 (refer to Figs. 1 and 2). When the cradle 2 supports the electronic device 3, the first side wall 42 and the second side wall 45 face the electronic device 3 in the X-direction as shown in Fig. 2. When the cradle 2 supports the electronic device 3, the facing wall 46 faces the electronic device 3 in the Z-direction (refer to Fig. 5 described later).

As shown in Fig. 2, the housing 4 has an outer edge that is substantially rectangular when viewed in the Z-direction. The rectangular outer edge has four corners 401, 402, 403, and 404. The corners 401 and 402 of the four corners 401, 402, 403, and 404 are rounded as described later.

As shown in Fig. 4, the cover 47 can be detached from another part of the housing 4. As shown in Fig. 3, the cover 47 attached to another part of the housing 4 covers the first side walls 42, 43, and 44.

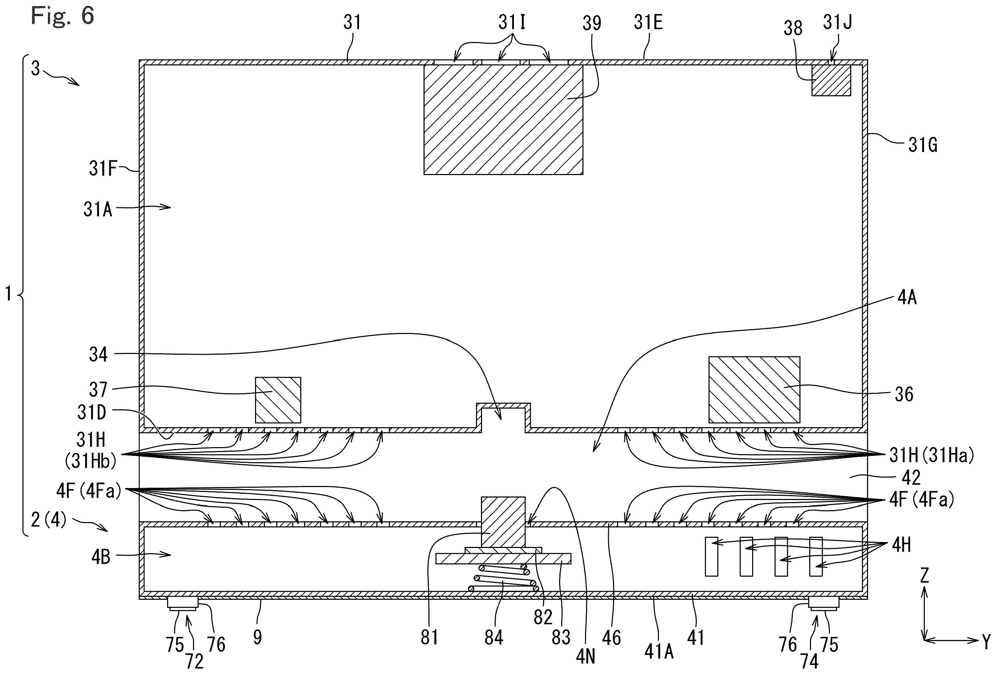

Fig. 5 is a sectional view taken along line V-V in Fig. 2. Fig. 6 is a sectional view taken along line VI-VI in Fig. 2 with the electronic device separated from the cradle.

As shown in Figs. 5 and 6, the housing 4 has a first internal space 4B and a second internal space 4C.

The first internal space 4B is surrounded by the bottom wall 41, the first side wall 42, the second side wall 45, and the facing wall 46. The second internal space 4C is surrounded by the bottom wall 41 and the first side walls 42, 43, and 44. The second side wall 45 and the facing wall 46 face the first internal space 4B. The first side walls 43 and 44 face the second internal space 4C. The bottom wall 41 and the first side wall 42 face the first internal space 4B and the second internal space 4C. The first internal space 4B and the second internal space 4C are separated by the first side wall 42 (refer to Fig. 5). In other words, the first internal space 4B and the second internal space 4C are separate from each other.

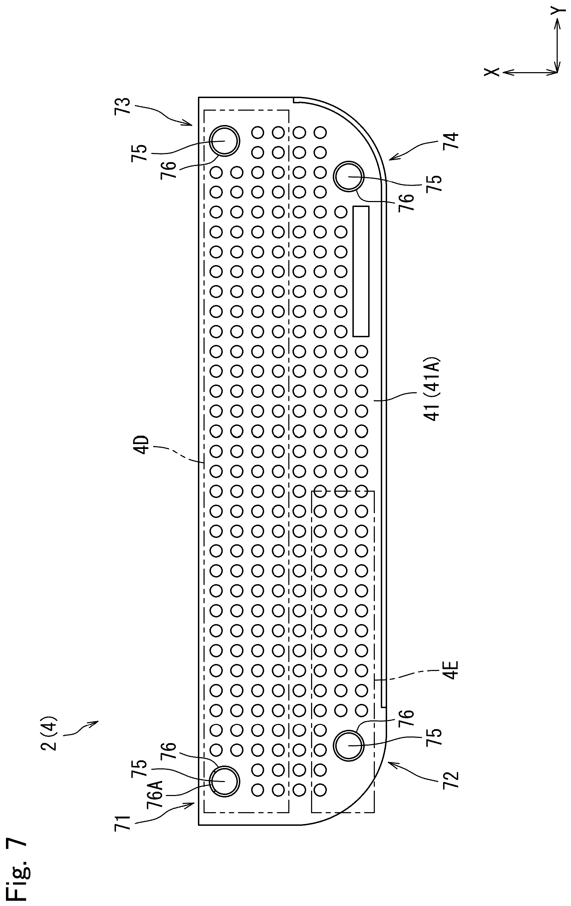

Fig. 7 is a schematic bottom view of the cradle according to the embodiment of the present disclosure.

As shown in Figs. 5 and 7, the bottom wall 41 has first inlets 4D and second inlets 4E. In the present embodiment, the first inlets 4D and the second inlets 4E are multiple through-holes arranged in the X-direction and the Y-direction. In Fig. 7, the first inlets 4D are the through-holes enclosed by the two-dot-dash line among the multiple through-holes. In Fig. 7, the second inlets 4E are the through-holes enclosed by the dot-dash line among the multiple through-holes. As shown in Fig. 5, the bottom wall 41 has the first inlets 4D in a part facing the first internal space 4B and the second inlets 4E in a part facing the second internal space 4C.

Each of the first inlets 4D and the second inlets 4E may have properties such as the shape, the number, the position, and the size other than those shown in Figs. 5 and 7. For example, the first inlets 4D and the second inlets 4E may not be circular. Fig. 7 includes circles in an area other than the area of the first inlets 4D and the second inlets 4E on the bottom wall 41. The circles indicate dummy holes. The circles are recessed upward from a bottom surface 41A that is the lower surface of the bottom wall 41, but do not extend through the bottom wall 41.

As shown in Figs. 5 and 6, the facing wall 46 has first outlets 4F. The first outlets 4F face the first internal space 4B. In the present embodiment, the first outlets 4F include two groups of first outlets 4Fa and 4Fb. The first outlets 4Fb are at first-side positions in the Y-direction relative to a connection terminal 81 (described later). The first outlets 4Fa are at second-side positions in the Y-direction relative to the connection terminal 81. Third inlets 4H (described later) are at second-side positions in the Y-direction relative to the connection terminal 81. In other words, the third inlets 4H are closer to the first outlets 4Fa than to the first outlets 4Fb. Each of the two groups of first outlets 4Fa and 4Fb includes seven slits extending through the facing wall 46.

The first outlets 4F may have properties such as the shape, the number, the position, and the size other than those shown in Figs. 5 and 6. For example, the number of first outlets 4Fa is not limited to seven.

As shown in Figs. 2 to 5, the first side wall 43 has second outlets 4G. As shown in Fig. 5, the housing 4 has the second outlets 4G in a part facing the second internal space 4C. In the present embodiment, the second outlets 4G are six slits extending through the first side wall 43.

The second outlets 4G may have properties such as the shape, the number, the position, and the size other than those shown in Figs. 2 to 5. For example, the second outlets 4G may be circular through-holes rather than slits. The second outlets 4G may be located in any wall other than the first side wall 43 that faces the second internal space 4C. For example, the second outlets 4G may be located in the first side wall 44.

As shown in Figs. 1, 4, and 6, the first side wall 42 has the third inlets 4H. The first side wall 42, of the first side walls 42 to 44, faces the first internal space 4B. In the present embodiment, the third inlets 4H are four slits extending through the first side wall 42.

The third inlets 4H may have properties such as the shape, the number, the position, and the size other than those shown in Figs. 1, 4, and 6. For example, the first side walls 42 to 44 may have the third inlets 4H in a part facing the first internal space 4B (the first side wall 42) and in a part facing the second internal space 4C (the first side walls 43 and 44). In other words, the first side walls 42 to 44 have the third inlets 4H in a part at least facing the first internal space 4B. The third inlets 4H described above are connected with the first internal space 4B. As described later, the third inlets 4H are connected with the outside of the housing 4 through an opening 47A when the cover 47 is attached. The third inlets 4H thus allow air to be drawn in from the outside of the housing 4 through the opening 47A when the cover 47 is attached.

The third inlets 4H have a smaller area than the first inlets 4D. In other words, the first inlets 4D have a larger area than the third inlets 4H. The area of the third inlets 4H is the area of the third inlets 4H as viewed in the X-direction perpendicular to the first side wall 42 having the third inlets 4H. The area of the first inlets 4D is the area of the first inlets 4D as viewed in the Z-direction perpendicular to the bottom wall 41 having the first inlets 4D. The area of the third inlets 4H is the total area of the multiple slits that are the third inlets 4H. The area of the first inlets 4D is the total area of the multiple through-holes that are the first inlets 4D.

As shown in Fig. 4, the first side wall 43 has fourth inlets 4I. The first side wall 43, of the first side walls 42 to 44, faces the second internal space 4C. In the present embodiment, the fourth inlets 4I are six slits extending through the first side wall 43.

The fourth inlets 4I may have properties such as the shape, the number, the position, and the size other than those shown in Fig. 4. For example, the fourth inlets 4I may be located in the first side wall 44.

In the present embodiment, the first side walls 42 to 44 have the fourth inlets 4I only in a part facing the second internal space 4C and the first side walls 42 to 44 have the third inlets 4H only in a part facing the first internal space 4B.

The fourth inlets 4I have a smaller area than the second inlets 4E. In other words, the second inlets 4E have a larger area than the fourth inlets 4I. The area of the fourth inlets 4I is the area of the fourth inlets 4I as viewed in the X-direction perpendicular to the first side wall 44 having the fourth inlets 4I. The area of the second inlets 4E is the area of the second inlets 4E as viewed in the Z-direction perpendicular to the bottom wall 41 having the second inlets 4E. The area of the fourth inlets 4I is the total area of the multiple slits that are the fourth inlets 4I. The area of the second inlets 4E is the total area of the multiple through-holes that are the second inlets 4E.

As shown in Fig. 4, the first side wall 44 includes connectors 4J, 4K, and 4L. In the present embodiment, the connector 4J is a Universal Serial Bus (USB, registered trademark) Type-C connector. In the present embodiment, the connector 4K is a High-Definition Multimedia Interface (HDMI, registered trademark) connector. In the present embodiment, the connector 4L is a LAN connector.

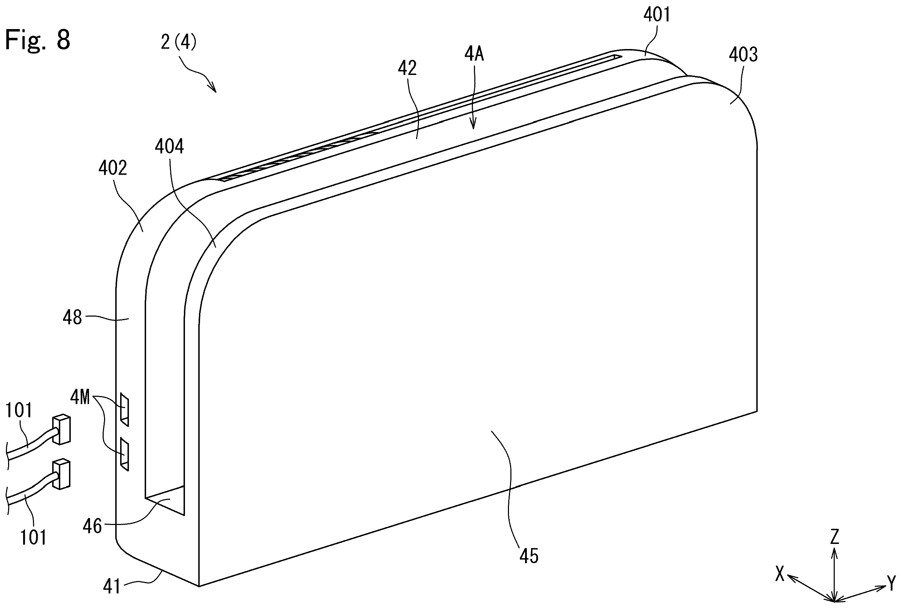

Fig. 8 is a schematic perspective view of the cradle according to the embodiment of the present disclosure.

As shown in Fig. 8, an outer surface 48 at a first-side position in the Y-direction of the housing 4 has two connection ports 4M. In the present embodiment, a first-side position in the Y-direction of the housing 4 is a position adjacent to the first side wall 43 in the Y-direction, and a second-side position in the Y-direction of the housing 4 is a position adjacent to the third inlets 4H in the Y-direction (refer to Fig. 4). The outer surface 48 and the two connection ports 4M are at first-side positions in the Y-direction farther than the first side wall 43 in the Y-direction.

In the present embodiment, the two connection ports 4M are USB (registered trademark) connectors. Each connection port 4M can receive an external cable 101. This allows, for example, an external memory, an external keyboard, controllers 32 of the electronic device 3 (refer to Fig. 1), and an external controller separate from the electronic device 3 to be connectable to the cradle 2 with the external cables 101. The number of connection ports 4M is not limited to two. The external controller and the external keyboard may be wirelessly connectable to the electronic device 3.

As shown in Figs. 3 and 4, the cover 47 covers the first side walls 42, 43, and 44. The cover 47 thus covers the connectors 4J, 4K, and 4L. The cover 47 does not cover the outer surface 48. The cover 47 thus does not cover the two connection ports 4M. The cover 47 does not cover a part of the first side wall 43. This allows the second outlets 4G to be partially exposed outside the housing 4 when the cover 47 is attached to another part of the housing 4.

As shown in Fig. 3, the cover 47 has a first side surface 471, a second side surface 472, and a curved surface 473. The first side surface 471 extends in the Y-direction and the Z-direction when the cover 47 covers the first side walls 42, 43, and 44. The second side surface 472 extends in the X-direction and the Z-direction when the cover 47 covers the first side walls 42, 43, and 44. The curved surface 473 connects the first side surface 471 and the second side surface 472.

The first side surface 471 has an upper portion curved further toward the second side wall 45 in the X-direction at closer positions to its top when viewed in the Y-direction. The second side surface 472 has an upper portion curved further toward a first-side position in the Y-direction (toward the two connection ports 4M) at closer positions to its top when viewed in the X-direction. The curved surface 473 curves further toward the second side wall 45 in the X-direction at closer positions to a second-side position in the Y-direction (at closer positions to the third inlets 4H) when viewed in the Z-direction. The corner 401 that is the upper end of an end portion of the cover 47 at a second-side position in the Y-direction is rounded with three curved portions of the first side surface 471, the second side surface 472, and curved surface 473 merging together. The corner 402 that is the upper end of the outer surface 48 and the corner 401 are symmetric in the Y-direction. In other words, the corner 402 and the corner 401 are rounded symmetrically in the Y-direction.

As shown in Figs. 3 and 4, the cover 47 has the opening 47A and through-holes 47B.

The opening 47A connects a space between the first side wall 42 and the cover 47 with the outside of the housing 4 when the cover 47 covers the first side walls 42, 43, and 44. The third inlets 4H are thus connected with the outside of the housing 4 through the opening 47A when the cover 47 is attached. The opening 47A extends from the first side surface 471 to the second side surface 472 through the curved surface 473.

In the present embodiment, the opening 47A is located in a lower portion of the cover 47 and faces the third inlets 4H in the X-direction.

External cables 101 connected to the connectors 4J, 4K, and 4L (refer to Fig. 8) can extend through the space between the first side wall 42 and the cover 47 to be routed outside the housing 4 through the opening 47A.

The opening 47A may have properties such as the shape, the number, the position, and the size other than those shown in Figs. 3 and 4. For example, the cover 47 may have multiple openings 47A.

The through-holes 47B align with the respective fourth inlets 4I in the X-direction when the cover 47 covers the first side walls 42, 43, and 44. This allows the cover 47 to cover the first side walls 42, 43, and 44 without covering the fourth inlets 4I.

As shown in Figs. 5 and 6, the cradle 2 includes a board 5, a fan 6, the connection terminal 81, and a conical spring 84 inside the housing 4.

As shown in Fig. 5, the board 5 is located in the second internal space 4C. In the present embodiment, the board 5 is attached to the first side wall 43. Heat-generating components 51 and 52 are mounted on the board 5. The heat-generating components 51 and 52 are, for example, integrated circuits such as central processing units (CPUs), resistors, or capacitors. The board 5 may have any number of heat-generating components mounted thereon, without being limited to two. The board 5 has at least one heat-generating component mounted thereon.

The fan 6 is located in the second internal space 4C. In the present embodiment, the fan 6 is attached to the first side wall 42. The fan 6 includes a casing 61 and a rotor 62. The casing 61 covers the rotor 62. The rotor 62 includes a portion exposed outside the casing 61. The rotor 62 rotates to draw in outside air from the portion exposed outside. The casing 61 has a discharge opening 6A. The air drawn into the rotor 62 is released outside the casing 61 through the discharge opening 6A.

The fan 6 is between the bottom wall 41 and the second outlets 4G in the Z-direction. In other words, the fan 6 is located above the bottom wall 41 and below the second outlets 4G. The discharge opening 6A of the fan 6 faces upward. The discharge opening 6A faces the second outlets 4G in the Z-direction. At least a part of the discharge opening 6A and at least a part of the second outlets 4G align with each other when viewed in the Z-direction.

An inner wall 421 is between the discharge opening 6A of the fan 6 and the second outlets 4G in the second internal space 4C. In the present embodiment, the inner wall 421 protrudes from the first side wall 42 in the X-direction. The inner wall 421 is located above the discharge opening 6A and below the second outlets 4G. The discharge opening 6A aligns with the inner wall 421 and the second outlets 4G align with the inner wall 421 when viewed in the Z-direction. The inner wall 421 has a slope 421A facing upward (in other words, facing the second outlets 4G) and inclined with respect to the Z-direction. In the present embodiment, the slope 421A is inclined downward with respect to the Z-direction toward the first side wall 43.

An inner wall 431 is located in the second internal space 4C. In the present embodiment, the inner wall 431 protrudes from the first side wall 43 in the X-direction. The inner wall 431 has a recess 431A recessed downward toward the bottom wall 41. The recess 431A is located on an imaginary extension plane 421B extending from and along the slope 421A toward the bottom wall 41.

When the fan 6 is driven, air outside the housing 4 is drawn into a lower portion of the second internal space 4C through the second inlets 4E, and then drawn into the rotor 62 through the portion of the rotor 62 exposed outside the fan 6. The air drawn into the rotor 62 is released into an upper portion of the second internal space 4C through the discharge opening 6A of the casing 61 of the fan 6 and flows between the inner wall 421 and the inner wall 431 to be released outside the housing 4 through the second outlets 4G.

The fan 6 may be at any position other than in the second internal space 4C at which the fan 6 can cause air to flow from the second inlets 4E to the second outlets 4G through the second internal space 4C. For example, the fan 6 may be attached to the second inlets 4E or the fourth inlets 4I outside the housing 4. In this case, when the fan 6 is driven, air outside the housing 4 is drawn into the second internal space 4C through the fan 6, and released from the second internal space 4C to the outside of the housing 4 through the second outlets 4G.

As shown in Fig. 6, the connection terminal 81 and the conical spring 84 are located in the first internal space 4B. The conical spring 84 supports the connection terminal 81 in a manner movable in the Z-direction. In the present embodiment, the connection terminal 81 is mounted on a board 82 in the first internal space 4B. The board 82 is supported by a support 83 located in the first internal space 4B. The support 83 is supported on the bottom wall 41 with the conical spring 84 between the support 83 and the bottom wall 41. The conical spring 84 is extendable in the Z-direction. The conical spring 84 is between the connection terminal 81 and the bottom wall 41 in the first internal space 4B and supports the connection terminal 81 in a manner movable in the Z-direction.

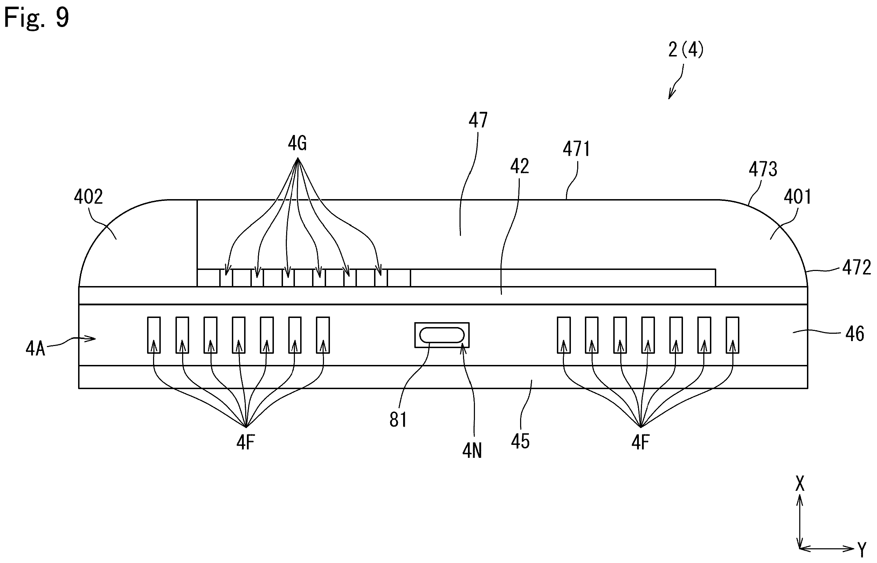

Fig. 9 is a schematic plan view of the cradle according to the embodiment of the present disclosure.

As shown in Figs. 6 and 9, the facing wall 46 of the housing 4 has a through-hole 4N extending through the facing wall 46 in the Z-direction. The connection terminal 81 partially protrudes into the groove 4A (to the outside of the housing 4) through the through-hole 4N. When the connection terminal 81 is received into a connector 34 (described later) of the electronic device 3, the connection terminal 81 is connected to the electronic device 3.

Fig. 10 is a schematic side view of the cradle according to the embodiment of the present disclosure.

As shown in Figs. 7 and 10, the cradle 2 includes the two first-side feet 71 and 72 and the two second-side feet 73 and 74.

The first-side feet 71 and 72 and the second-side feet 73 and 74 protrude from the bottom surface 41A of the bottom wall 41. The bottom surface 41A of the bottom wall 41 is opposite to a surface of the bottom wall 41 facing the first internal space 4B and the second internal space 4C. When the housing 4 is placed on, for example, a desk, the first-side feet 71 and 72 and the second-side feet 73 and 74 are in contact with the placement surface 102.

The first-side feet 71 and 72 are at first-side positions in the Y-direction of the bottom wall 41 (adjacent to the two connection ports 4M) when the bottom wall 41 is viewed in the Z-direction. The first-side foot 71 is at a first-side position in the X-direction of the bottom wall 41 (adjacent to the second side wall 45) when the bottom wall 41 is viewed in the Z-direction. The first-side foot 72 is at a second-side position in the X-direction of the bottom wall 41 (adjacent to the cover 47) when the bottom wall 41 is viewed in the Z-direction. The first-side foot 71 is an example of a first foot, and the first-side foot 72 is an example of a second foot.

The second-side feet 73 and 74 are at second-side positions in the Y-direction of the bottom wall 41 (adjacent to the third inlets 4H) when the bottom wall 41 is viewed in the Z-direction. The second-side foot 73 is at a first-side position in the X-direction of the bottom wall 41 (adjacent to the second side wall 45) when the bottom wall 41 is viewed in the Z-direction. The second-side foot 74 is at a second-side position in the X-direction of the bottom wall 41 (adjacent to the cover 47) when the bottom wall 41 is viewed in the Z-direction.

The first-side feet 71 and 72 and the second-side feet 73 and 74 each include a center portion 75 and a surrounding portion 76 surrounding the center portion 75 when viewed in the Z-direction. The center portion 75 is formed from a material with a high coefficient of friction such as rubber. The surrounding portion 76 is formed from a material such as resin. In the present embodiment, the surrounding portion 76 has a lower coefficient of friction than the center portion 75. In the present embodiment, the center portion 75 is columnar, and the surrounding portion 76 is cylindrical. The center portion 75 is located inward from the surrounding portion 76.

The center portion 75 of each of the first-side foot 72 and the second-side feet 73 and 74 protrudes farther than the surrounding portion 76 in the Z-direction. The center portions 75 of the first-side foot 72 and the second-side feet 73 and 74 are thus in contact with the placement surface 102 when the housing 4 is placed on, for example, a desk. The center portions 75 of the first-side foot 72 and the second-side feet 73 and 74 are each an example of a contact portion.

The surrounding portion 76 of the first-side foot 71 includes a protrusion 76A. In the present embodiment, the protrusion 76A is at an outward position in the surrounding portion 76 in the X-direction (adjacent to an edge of the housing 4 in the X-direction). The protrusion 76A may be at a position other than the position described above (the outward position in the surrounding portion 76 in the X-direction). For example, the protrusion 76A may extend along the entire circumference of the surrounding portion 76.

The protruding length of the protrusion 76A on the first-side foot 71 in the Z-direction is greater than the protruding length of parts of the surrounding portion 76 other than the protrusion 76A in the Z-direction. The protruding length of the protrusion 76A in the Z-direction is greater than the protruding length of the center portion 75 of the first-side foot 71 in the Z-direction. The protruding length of the center portion 75 of the first-side foot 71 in the Z-direction is less than the protruding length of the center portions 75 of the first-side foot 72 and the second-side feet 73 and 74 in the Z-direction. In the present embodiment, the protruding length of the center portion 75 of the first-side foot 71 in the Z-direction is substantially the same as the protruding length of the surrounding portion 76 of the first-side foot 71 in the Z-direction. Thus, the protrusion 76A on the first-side foot 71 is in contact with the placement surface 102. The protrusion 76A on the first-side foot 71 is an example of the contact portion.

As described above, the surrounding portions 76 have a lower coefficient of friction than the center portions 75. Thus, the contact portion of the first-side foot 71 (the protrusion 76A) has a lower coefficient of friction than the contact portion (the center portion 75) of each of the first-side feet 71 and 72 and the second-side feet 73 and 74.

In the present embodiment, the cradle 2 includes two first-side feet 71 and 72 and two second-side feet 73 and 74. However, the number of first-side feet is not limited to two, and the number of second-side feet is not limited to two. The cradle 2 includes at least one first-side foot and at least one second-side foot. For example, the cradle 2 may include one first-side foot and one second-side foot or one first-side foot and three second-side feet.

In the present embodiment, the contact portion of one (the first-side foot 71) of the multiple first-side feet has a lower coefficient of friction than the contact portions of the second-side feet. However, the contact portion of at least one of the multiple first-side feet may have a lower coefficient of friction than the contact portions of the second-side feet. For example, the first-side foot 72 may have the same structure as the first-side foot 71. In this case, the contact portions (protrusions 76A) of the two first-side feet 71 and 72 each have a lower coefficient of friction than the contact portions (center portions 75) of the second-side feet 73 and 74.

As shown in Fig. 1, the cradle 2 includes a mesh member 9. The mesh member 9 is attached to the bottom surface 41A of the bottom wall 41. The mesh member 9 covers the first inlets 4D and the second inlets 4E (refer to Fig. 7). The mesh member 9 is formed from a material such as polyester, modacrylic, polyolefin, stainless steel (stainless used steel, or SUS), copper, or nickel. The mesh member 9 is not shown in Figs. 3, 4, 7, and 8.

The structure of the electronic device 3 will now be described. In the structure of the electronic device 3 described below, the X-direction, the Y-direction, and the Z-direction are defined with the electronic device 3 supported by the housing 4 of the cradle 2.

As shown in Figs. 1 and 2, the electronic device 3 includes a body 31 and two controllers 32.

In the present embodiment, the body 31 is a rectangular prism with an internal space 31A as shown in Figs. 5 and 6. The body 31 has a front surface 31B, a back surface 31C, a lower surface 31D, an upper surface 31E, a side surface 31F, and a side surface 31G.

As shown in Fig. 5, the front surface 31B and the back surface 31C are spaced from each other in the X-direction with the internal space 31A between the front surface 31B and the back surface 31C. The front surface 31B and the back surface 31C face away from each other in the X-direction. When the electronic device 3 is supported by the housing 4 of the cradle 2, the front surface 31B faces the second side wall 45 of the cradle 2 in the X-direction, as shown in Figs. 2 and 5. When the electronic device 3 is supported by the housing 4 of the cradle 2, the back surface 31C faces the first side wall 42 of the cradle 2 in the X-direction.

As shown in Fig. 5, the lower surface 31D and the upper surface 31E are connected to the front surface 31B and the back surface 31C. As shown in Figs. 5 and 6, the lower surface 31D and the upper surface 31E are spaced from each other in the Z-direction with the internal space 31A between the lower surface 31D and the upper surface 31E. The lower surface 31D and the upper surface 31E face away from each other in the Z-direction. When the electronic device 3 is supported by the housing 4 of the cradle 2, the lower surface 31D faces downward to face the facing wall 46 of the cradle 2 in the Z-direction. When the electronic device 3 is supported by the housing 4 of the cradle 2, the upper surface 31E faces upward.

As shown in Fig. 6, the side surface 31F and the side surface 31G are connected to the front surface 31B and the back surface 31C. The side surface 31F and the side surface 31G are spaced from each other in the Y-direction with the internal space 31A between the side surface 31F and the side surface 31G. The side surface 31F and the side surface 31G face away from each other in the Y-direction. When the electronic device 3 is supported by the housing 4 of the cradle 2, the side surface 31F is at a first-side position in the Y-direction (adjacent to the two connection ports 4M of the cradle 2), and the side surface 31G is at a second-side position in the Y-direction (adjacent to the third inlets 4H of the cradle 2).

As shown in Figs. 2, 5 and 6, the electronic device 3 includes the connector 34, a display 35, heat-generating components 36 and 37, a microphone 38, and a fan 39.

As shown in Fig. 6, the connector 34 is a port located on the lower surface 31D. When the electronic device 3 is supported by the housing 4 of the cradle 2, the connector 34 receives the connection terminal 81 of the cradle 2. Thus, the connector 34 of the electronic device 3 and the connection terminal 81 of the cradle 2 are connected to each other to electrically connect the electronic device 3 and the cradle 2 when the electronic device 3 is supported by the housing 4 of the cradle 2.

As shown in Figs. 2, 5 and 6, the display 35, the heat-generating components 36 and 37, the microphone 38, and the fan 39 are located in the internal space 31A of the body 31. In Fig. 2, the display 35 and the microphone 38 are drawn with the dashed lines to indicate that the display 35 and the microphone 38 are located in the internal space 31A.

The display 35 is, for example, a liquid crystal display or an organic electroluminescent (EL) display to display images and videos. The front surface 31B of the body 31 has an opening in a portion other than the outer edge. The display 35 is exposed to the outside of the body 31 through the opening. This allows, for example, images and videos displayed on the display 35 to be viewable from outside the electronic device 3. When the electronic device 3 is supported by the housing 4 of the cradle 2, the display 35 faces a first-side position in the X-direction (faces the second side wall 45). In the present embodiment, the display 35 does not display, for example, images and videos when the electronic device 3 is supported by the housing 4 of the cradle 2.

The heat-generating components 36 and 37 are mounted on a board (not shown) in the internal space 31A. The heat-generating components 36 and 37 are, for example, integrated circuits such as CPUs, resistors, or capacitors. The number of heat-generating components mounted on the board in the electronic device 3 is not limited to two. The board in the electronic device 3 may have at least one heat-generating component mounted thereon. The heat-generating component 36 is a component with the highest heat generation of the heat-generating components included in the electronic device 3. In the present embodiment, the heat-generating component 36 is a system on chip (SoC).

The microphone 38 and the fan 39 are located in the internal space 31A and are electrically connected to the board described above. The microphone 38 captures external sound. The fan 39 is driven to cause air around the fan 39 to flow.

As shown in Fig. 6, the lower surface 31D has one or more device inlets 31H. More specifically, when the electronic device 3 is supported by the housing 4 of the cradle 2, the device inlets 31H face the facing wall 46 of the cradle 2 in the Z-direction. In the present embodiment, the device inlets 31H include two groups of device inlets 31Ha and 31Hb. The two groups of device inlets 31Ha and 31Hb connect the internal space 31A with the outside of the body 31. In the present embodiment, each of the two groups of device inlets 31Ha and 31Hb includes seven slits extending through the wall having the lower surface 31D of the body 31 in the Z-direction. The two groups of device inlets 31Ha and 31Hb may have properties such as the shape, the number, the position, and the size other than those shown in Fig. 6.

The device inlets 31Hb are at first-side positions in the Y-direction relative to the connector 34. The device inlets 31Ha are at second-side positions in the Y-direction relative to the connector 34. In other words, the connector 34 is between the device inlets 31Ha and the device inlets 31Hb in the Y-direction.

When the electronic device 3 is supported by the housing 4 of the cradle 2, the device inlets 31Ha and the heat-generating component 36 of the electronic device 3 and the first outlets 4Fa and the third inlets 3H of the cradle 2 are at second-side positions in the Y-direction relative to the connector 34 and the connection terminal 81. When the electronic device 3 is supported by the housing 4 of the cradle 2, the device inlets 31Hb of the electronic device 3 and the first outlets 4Fb of the cradle 2 are at the first-side positions in the Y-direction relative to the connector 34 and the connection terminal 81.

In the present embodiment, the device inlets 31H and the first outlets 4F of the cradle 2 face each other in the Z-direction when the electronic device 3 is supported by the housing 4 of the cradle 2. More specifically, the device inlets 31Ha and the first outlets 4Fa of the cradle 2 face each other in the Z-direction and the device inlets 31Hb, and the first outlets 4Fb of the cradle 2 face each other in the Z-direction.

The heat-generating component 36 with the highest heat generation of the heat-generating components in the internal space 31A of the electronic device 3 is thus located closer to the device inlets 31Ha than to the device inlets 31Hb when the electronic device 3 is supported by the housing 4 of the cradle 2. The third inlets 4H of the cradle 2 are located closer to the device inlets 31Ha than to the device inlets 31Hb when the electronic device 3 is supported by the housing 4 of the cradle 2. Each of the device inlets 31Ha is an example of a first device inlet. Each of the device inlets 31Hb is an example of a second device inlet.

The upper surface 31E has three device outlets 31I and one microphone opening 31J. The number of device outlets 31I is not limited to three. The number of microphone openings 31J is not limited to one. The device outlets 31I are located adjacent to the fan 39 in the internal space 31A. The microphone opening 31J is located adjacent to the microphone 38 in the internal space 31A. The microphone opening 31J exposes the microphone 38 to the outside of the body 31.

As shown in Fig. 5, the second outlets 4G of the cradle 2 are located in an upper portion of the cradle 2. The second outlets 4G are thus located closer to the upper surface 31E than to the lower surface 31D in the Z-direction when the electronic device 3 is supported by the housing 4 of the cradle 2.

As shown in Fig. 2, the second outlets 4G are offset from the microphone opening 31J in the Y-direction when the electronic device 3 is supported by the housing 4 of the cradle 2. The second outlets 4G are also offset from the microphone opening 31J in the X-direction when the electronic device 3 is supported by the housing 4 of the cradle 2. The second outlets 4G are located opposite to the microphone opening 31J from the device outlets 31I in the Y-direction.

The fan 39 in the electronic device 3 is driven to generate an airflow toward the device outlets 31I in the internal space 31A of the body 31. This causes air to flow from the outside of the body 31 to the internal space 31A through the device inlets 31H. When the electronic device 3 is supported by the housing 4 of the cradle 2, the device inlets 31H face the first outlets 4F of the cradle 2 in the Z-direction. Thus, air in the first internal space 4B of the housing 4 of the cradle 2 flows into the internal space 31A through the first outlets 4F and the device inlets 31H. This causes an airflow from the first inlets 4D and the third inlets 4H to the first outlets 4F in the first internal space 4B. Thus, the fan 39 in the electronic device 3 is driven to cause air to flow in the first internal space 4B of the cradle 2 and the internal space 31A of the electronic device 3 when the electronic device 3 is supported by the housing 4 of the cradle 2.

In the present embodiment, the cradle 2 does not include a fan to cause air to flow in the first internal space 4B. However, the cradle 2 may include a fan to cause air to flow in the first internal space 4B.

The two controllers 32 shown in Figs. 1 and 2 are used to operate the electronic device 3. As shown in Figs. 1 and 2, each of the two controllers 32 includes a stick 321 used for operations, front surface operation buttons 322, and a back surface operation button 323. The back surface operation button 323 is an example of an operable portion. The stick 321 and the front surface operation buttons 322 are located on a front surface 32A of each of the controllers 32. The back surface operation button 323 is located on a back surface 32B of each of the controllers 32. The front surface 32A and the back surface 32B are spaced from each other in the X-direction. The front surface 32A and the back surface 32B face away from each other in the X-direction.

The two controllers 32 are attachable to and detachable from the body 31. One of the two controllers 32 is attachable to and detachable from the side surface 31F of the body 31. The other of the two controllers 32 is attachable to and detachable from the side surface 31G of the body 31. In the present embodiment, the body 31 includes a magnet (not shown) on or adjacent to each of the side surfaces 31F and 31G, and each of the two controllers 32 includes a magnetic portion formed from, for example, iron. This allows the two controllers 32 to be attached to the body 31. The controllers 32 can be attached to and detached from the body 31 with any of various known methods such as mating, other than the method using magnets.

When the electronic device 3 with the controllers 32 attached to the body 31 is supported by the housing 4 of the cradle 2, the back surface operation button 323 of one of the two controllers 32 faces the corner 402 of the housing 4 in the Y-direction with a spacing between the back surface operation button 323 and the corner 402, as shown in Fig. 1. When the electronic device 3 with the controllers 32 attached to the body 31 is supported by the housing 4 of the cradle 2, the back surface operation button 323 of the other of the two controllers 32 faces the corner 401 of the housing 4 in the Y-direction with a spacing between the back surface operation button 323 and the corner 401. The corners 401 and 402 are rounded. In other words, the back surface operation button 323 of each of the two controllers 32 faces one (the corner 401 or the corner 402) of the multiple corners of the housing 4 with a spacing between the back surface operation button 323 and the corner, and the corner is rounded.

Each of the back surface operation buttons 323 is operable to detach the corresponding controller 32 from the body 31. When the back surface operation button 323 is operated with the corresponding controller 32 attached to the body 31, a projection (not shown) protrudes from the corresponding controller 32 to push the side surface 31F or 31G of the body 31 in the present embodiment. This separates the corresponding controller 32 from the body 31.

The cradle 2 and the electronic device support system 1 can produce the effects described below.

A cradle may use a fan in an electronic device supported by the cradle to cool the inside of the cradle. Examples will be described below. Each of the cradle and the electronic device includes an inlet and an outlet. When the cradle supports the electronic device, the fan in the electronic device is driven to generate an airflow from the inlet of the cradle to the inside of the electronic device through the inside of the cradle, the outlet of the cradle, and the inlet of the electronic device. This cools the inside of the cradle as well as the inside of the electronic device including the fan.

However, in the structure described above, the air flowing into the electronic device is heated by a heat-generating component located in the cradle and may thus have a higher temperature than the outside air. This may lower the cooling effect inside the electronic device.

In the present embodiment, air flows in from the first inlets 4D of the cradle 2 to the internal space 31A of the electronic device 3 through the first internal space 4B, the first outlets 4F of the cradle 2, and the device inlets 31H of the electronic device 3. The first internal space 4B is separate from the second internal space 4C in which the heat-generating components 51 and 52 are located. In other words, air that flows in from the first inlets 4D of the cradle 2 does not pass through the second internal space 4C in which the heat-generating components 51 and 52 are located. Thus, the air that flows into the internal space 31A of the electronic device 3 through the device inlets 31H is not heated by the heat-generating components 51 and 52 located in the second internal space 4C. This can increase the cooling effect in the internal space 31A of the electronic device 3.

In the present embodiment, the fan 6 in the cradle 2 causes air to flow in the second internal space 4C of the cradle 2. This structure allows a greater and faster airflow in the second internal space 4C of the cradle 2 than a structure in which the fan 39 in the electronic device 3 causes air to flow inside the cradle 2. This can increase the cooling effect in the second internal space 4C.

In the present embodiment, the facing wall 46 and the bottom wall 41 face each other. This causes air to easily flow from the first inlets 4D in the bottom wall 41 to the first outlets 4F in the facing wall 46 in the first internal space 4B. This causes air to easily flow from the first inlets 4D to the internal space 31A of the electronic device 3 through the first internal space 4B. This can increase the cooling effect in the internal space 31A of the electronic device 3.

In the present embodiment, air flows into the first internal space 4B through the third inlets 4H in addition to the first inlets 4D. This increases the volume of airflow into the first internal space 4B. This can increase the cooling effect in the first internal space 4B and the internal space 31A of the electronic device 3 into which the air flows from the first internal space 4B.

In the present embodiment, the first inlets 4D have a larger area than the third inlets 4H. The structure according to the present embodiment allows the first side wall 42 having the third inlets 4H to have a higher strength than a structure in which the third inlets 4H have a larger area than the first inlets.

When the opening 47A of the cover 47 is fully blocked, air may be prevented from flowing through the third inlets 4H in the first side wall 42. In the present embodiment, the opening 47A extends from the first side surface 471 to the second side surface 472 through the curved surface 473. Thus, when a portion of the opening 47A in one of the first side surface 471 or the second side surface 472 is blocked by, for example, a wall, air can flow into the third inlets 4H through a portion of the opening 47A in the other of the first side surface 471 or the second side surface 472. When the cradle 2 is placed, for example, in a corner between walls in a room and the first side surface 471 and the second side surface 472 are against the walls, air can flow into the third inlets 4H through a gap between the curved surface 473 and the walls.

In the present embodiment, air flows into the first internal space 4B through the third inlets 4H in addition to the first inlets 4D, and also flows into the second internal space 4C through the fourth inlets 4I in addition to the second inlets 4E. This increases the volume of airflow into each of the first internal space 4B and the second internal space 4C. This can increase the cooling effect in the first internal space 4B, the second internal space 4C, and the internal space 31A of the electronic device 3.

In the present embodiment, the second inlets 4E have a larger area than the fourth inlets 4I. The structure according to the present embodiment allows the first side wall 43 having the fourth inlets 4I to have a higher strength than a structure in which the fourth inlets 4I have a larger area than the second inlets 4E.

In the present embodiment, the heat-generating component 36 with the highest heat generation in the internal space 31A of the electronic device 3 is located closer to one of the two groups of device inlets 31H (the device inlets 31Ha) than to the other of the two groups of device inlets 31H (the device inlets 31Hb). The third inlets 4H are also located closer to one of the two groups of device inlets (the device inlets 31Ha) than to the other of the two groups of device inlets (the device inlets 31Hb). This structure allows air to be easily directed, through the third inlets 4H in addition to the first inlets 4D, to the heat-generating component 36 with the highest heat generation to cool the heat-generating component 36. This can increase the cooling effect on the heat-generating component 36 with the highest heat generation.

When the cradle 2 is placed on the placement surface 102 with the bottom wall 41 facing the placement surface 102, foreign matter such as dust on the placement surface 102 may enter the first internal space 4B and the second internal space 4C through the first inlets 4D and the second inlets 4E in the bottom wall 41. In the present embodiment, the mesh member 9 covering the first inlets 4D and the second inlets 4E reduces entry of the foreign matter described above.

In the present embodiment, each of the inlets and the outlets in the walls other than the bottom wall 41 (e.g., the third inlets 4H in the first side wall 42, and the fourth inlets 4I and the second outlets 4G in the first side wall 43) is not covered with a mesh member. The inlets and the outlets in the walls other than the bottom wall 41 are less likely to allow entry of foreign matter than the inlets and the outlets in the bottom wall 41 that faces the placement surface 102.

In the present embodiment, the inner wall 421 reduces entry of foreign matter, which has entered the second internal space 4C through the second outlets 4G, into the fan 6 through the discharge opening 6A of the fan 6.

In the present embodiment, the inner wall 421 has the slope 421A facing the second outlets 4G. Thus, foreign matter that has entered through the second outlets 4G is less likely to remain on the inner wall 421.

In the present embodiment, foreign matter that has fallen from the inner wall 421 along the slope 421A of the inner wall 421 can be accumulated in the recess 431A.

When the external cables 101 connected to the connection ports 4M are moved, the cradle 2 may tip over. In the present embodiment, the second-side feet 73 and 74 are at the second-side positions in the Y-direction, and the connection ports 4M and the first-side feet 71 and 72 are at the first-side positions in the Y-direction. The contact portion (protrusion 76A) of at least one of the first-side feet 71 and 72 (the first-side foot 71 in the present embodiment) has a lower coefficient of friction than the contact portions (center portions 75) of the second-side feet 73 and 74. The first-side foot 71 including the contact portion with a lower coefficient of friction can thus slide relative to the placement surface 102 when the external cables 101 connected to the connection ports 4M are moved. This allows the cradle 2 to pivot, instead of tipping over, about its portion with the second-side feet 73 and 74, which each includes the contact portion with a higher coefficient of friction, at a second-side position in the Y-direction. The structure according to the present embodiment allows the cradle 2 to pivot easily, reducing the likelihood of the cradle 2 tipping over.

The cradle 2 supporting the electronic device 3 is often placed on the placement surface 102 in an orientation in which a portion of the display 35 of the electronic device 3 exposed outside faces a user. In the orientation described above, the first-side foot 71 including the contact portion (protrusion 76A) with a lower coefficient of friction is at a position adjacent to the portion of the display 35 exposed outside in the X-direction, and the first-side foot 72 including the contact portion (center portion 75) with a higher coefficient of friction is at a position opposite to the externally exposed portion of the display 35 in the X-direction in the present embodiment. In the orientation described above, the first-side foot 71 including the contact portion with a lower coefficient of friction can thus slide relative to the placement surface 102 when the external cables 101 connected to the connection ports 4M are pulled toward the user. This reduces the likelihood of the cradle 2 tipping over.

When the electronic device 3 is supported by the cradle 2, the second outlets 4G of the cradle 2 are offset from the microphone opening 31J of the electronic device 3 in the Y-direction and the X-direction in the present embodiment. Thus, the microphone 38 in the electronic device 3 receives less noise resulting from air flowing out through the second outlets 4G of the cradle 2.

When each back surface operation button 323 is operated, an operator may have, for example, their finger placed between the back surface operation button 323 and one (the corner 401 or the corner 402) of the multiple corners of the housing 4 in the present embodiment. One of the multiple corners of the housing 4 is rounded. This structure allows a larger space for receiving, for example, a finger of the operator than a structure in which one of the multiple corners of the housing 4 is bent rather than being rounded. When the corner is bent, the operator may have, for example, their finger caught in the bent portion. In the present embodiment, one of the multiple corners of the housing 4 is rounded, thus reducing the likelihood of the operator having, for example, their finger caught in the corner.

In the present embodiment, the conical spring 84 supports the connection terminal 81. The spring can thus be shorter in the Z-direction than in a structure in which a cylindrical spring supports the connection terminal 81 while maintaining its stroke length in the Z-direction and its strength. This allows a large space between the connection terminal 81 and the bottom wall 41 in the first internal space 4B. This structure reduces the likelihood that the conical spring 84 and the connection terminal 81 prevent air from flowing in the first internal space 4B. This structure also avoid an increase in the resistance when air is drawn in through the first inlets 4D and the third inlets 4H, thus avoiding a decrease in the amount of air drawn in.

### EXPLANATION OF REFERENCES

- 1: electronic device support system
- 2: cradle
- 3: electronic device
- 31: body
- 31A: internal space
- 31D: lower surface
- 31E: upper surface
- 31H: device inlet
- 31J: microphone opening
- 32: controller
- 323: back surface operation button (operable portion)
- 35: display
- 36: heat-generating component
- 37: heat-generating component
- 38: microphone
- 4: housing
- 401: corner
- 402: corner
- 41: bottom wall
- 41A: bottom surface
- 42: first side wall
- 421: inner wall
- 421A: slope
- 43: first side wall
- 431A: recess
- 44: first side wall
- 46: facing wall
- 47: cover
- 471: first side surface
- 472: second side surface
- 473: curved surface
- 47A: opening
- 4B: first internal space
- 4C: second internal space
- 4D: first inlet
- 4E: second inlet
- 4F: first outlet
- 4G: second outlet
- 4H: third inlet
- 4I: fourth inlet
- 5: board
- 51: heat-generating component
- 52: heat-generating component
- 6: fan
- 6A: discharge opening
- 71: first-side foot (first foot)
- 72: first-side foot (second foot)
- 73: second-side foot
- 74: second-side foot
- 75: center portion (contact portion)
- 76A: protrusion (contact portion)
- 81: connection terminal
- 84: conical spring
- 9: mesh member
- 101: external cable
- 102: placement surface

## Claims

1. A cradle, comprising:
a housing configured to support an electronic device having at least one device inlet, the housing having
a first internal space,
a second internal space separate from the first internal space,
a facing wall facing the first internal space, the facing wall having a first outlet to face the at least one device inlet of the electronic device being supported by the housing, and
a bottom wall facing the first internal space and the second internal space;
a board located in the second internal space, the board having at least one heat-generating component mounted thereon; and
a fan,
wherein the bottom wall has a first inlet in a part facing the first internal space,
the bottom wall has a second inlet in a part facing the second internal space,
the housing has a second outlet in a part facing the second internal space, and
the fan causes air to flow from the second inlet to the second outlet through the second internal space.

2. The cradle according to claim 1, wherein
the facing wall and the bottom wall face each other.

3. The cradle according to claim 1, wherein
the housing has a side wall extending, from the bottom wall, in a direction intersecting with the bottom wall and facing the first internal space and the second internal space, and
the side wall has a third inlet at least in a part facing the first internal space.

4. The cradle according to claim 3, wherein
the first inlet has a larger area than the third inlet.

5. The cradle according to claim 3, further comprising:
a cover covering the side wall, the cover being detachable from the housing,
wherein the cover has a first side surface, a second side surface, and a curved surface connecting the first side surface and the second side surface,
the cover covering the side wall has an opening connecting a space between the side wall and the cover with an outside of the cradle, and
the opening extends from the first side surface to the second side surface through the curved surface.

6. The cradle according to claim 3, wherein
the side wall has a fourth inlet only in a part facing the second internal space, and
the side wall has the third inlet only in a part facing the first internal space.

7. The cradle according to claim 6, wherein
the second inlet has a larger area than the fourth inlet.

8. The cradle according to claim 3, wherein
the electronic device includes two device inlets and one or more heat-generating components inside the electronic device,
a heat-generating component with highest heat generation of the one or more heat-generating components inside the electronic device is located closer to a first device inlet of the two device inlets than to a second device inlet of the two device inlets,
the first outlet faces the two device inlets, and
the third inlet is located closer to the first device inlet of the two device inlets than to the second device inlet of the two device inlets when the electronic device is supported by the housing.

9. The cradle according to any one of claims 1 to 8, further comprising:
a mesh member covering the first inlet and the second inlet.

10. The cradle according to any one of claims 1 to 8, wherein
the fan is between the bottom wall and the second outlet in a vertical direction perpendicular to the bottom wall in the second internal space,
the fan has a discharge opening facing the second outlet in the vertical direction,
the second internal space has an inner wall between the discharge opening of the fan and the second outlet, and
the inner wall has a slope facing the second outlet and inclined with respect to the vertical direction.

11. The cradle according to claim 10, wherein
the second internal space has a recess recessed in the vertical direction toward the bottom wall, and
the recess is located on an imaginary extension plane extending from and along the slope toward the bottom wall.

12. The cradle according to any one of claims 1 to 8, further comprising:
one or more first-side feet protruding from a bottom surface of the bottom wall opposite to a surface of the bottom wall facing the first internal space and the second internal space, the one or more first-side feet being at first-side positions in a longitudinal direction of the bottom wall when the bottom wall is viewed in a vertical direction perpendicular to the bottom wall;
one or more second-side feet protruding from the bottom surface at second-side positions in the longitudinal direction of the bottom wall; and
a connection port to which an external cable is connectable, the connection port being located on an outer surface of the housing at a first-side position in the longitudinal direction,
wherein each of the one or more first-side feet and the one or more second-side feet includes a contact portion to be in contact with a placement surface when the cradle is placed on the placement surface, and
the contact portion of at least one of the one or more first-side feet has a lower coefficient of friction than the contact portion of each of the one or more second-side feet.

13. The cradle according to claim 12, wherein
the one or more first-side feet include
a first foot protruding from the bottom surface at a first-side position in a lateral direction of the bottom wall when the bottom wall is viewed in the vertical direction, and
a second foot protruding from the bottom surface at a second-side position in the lateral direction of the bottom wall,
the housing is to support the electronic device with a display of the electronic device facing a first-side position in the lateral direction, and
the contact portion of the first foot has a lower coefficient of friction than the contact portion of the second foot.

14. The cradle according to any one of claims 1 to 8, wherein
the electronic device includes a microphone inside the electronic device, a lower surface having the at least one device inlet, an upper surface spaced from the lower surface and facing away from the lower surface, and a microphone opening in the upper surface to expose the microphone to an outside of the electronic device, and
when the electronic device is supported by the housing, the second outlet is located closer to the upper surface than to the lower surface in a vertical direction perpendicular to the bottom wall, the second outlet is offset from the microphone opening in a first direction perpendicular to the vertical direction, and the second outlet is offset from the microphone opening in a second direction perpendicular to the vertical direction and the first direction.

15. The cradle according to any one of claims 1 to 8, wherein
the electronic device includes a body having the at least one device inlet, and a controller attachable to and detachable from the body, and the controller includes an operable portion operable to detach the controller from the body,
when the electronic device with the controller attached to the body is supported by the housing, the operable portion faces a corner of a plurality of corners of the housing with a spacing between the operable portion and the corner, and
the corner of the plurality of corners of the housing facing the operable portion with a spacing between the operable portion and the corner is rounded.

16. The cradle according to any one of claims 1 to 8, further comprising:
a connection terminal located in the first internal space and partially protruding from the facing wall, the connection terminal being connectable to the electronic device; and
a conical spring located in the first internal space between the connection terminal and the bottom wall, the conical spring supporting the connection terminal in a manner movable in a vertical direction perpendicular to the bottom wall.

17. An electronic device support system, comprising:
the cradle according to any one of claims 1 to 8; and
the electronic device.
